# EUROPÄISCHE PATENTSCHRIFT

(11) **EP 0 768 470 B1**
(45) Veröffentlichungstag und Bekanntmachung des Hinweises auf die Patenterteilung: **02.10.2002**
(21) Anmeldenummer: 96110953.5
(22) Anmeldetag: 06.07.1996
(51) Int. Cl.: F16C 1/22, B60T 11/04

(54) **Vorrichtung zur Längeneinstellung von mechanisch-flexiblen Fernbetätigungszügen**
Device for length adjusting of flexible mechanical remote controls
Dispositif de réglage de la longueur de commandes à distance mécaniques flexibles

(30) Priorität: 11.10.1995 DE 19537864
(43) Veröffentlichungstag der Anmeldung: 16.04.1997
(73) Patentinhaber: KÜSTER & Co. GmbH, 35630 Ehringshausen (DE)
(72) Erfinder: Krug, Michael, 35614 Asslar (DE); Hilgert, Günter, 35584 Wetzlar-Naunheim (DE)
(74) Vertreter: Müller, Eckhard, Dr.

(56) Entgegenhaltungen:
- EP-A- 0 342 994
- EP-A- 0 638 733
- FR-A- 2 607 202
- US-A- 5 178 034

## Beschreibung

Die Erfindung betrifft eine Vorrichtung zur Längeneinstellung von mechanisch-flexiblen Fernbetätigungszügen o. dgl., insbesondere für Bremsseilzüge von Kraftfahrzeugen, mit ineinanderschiebbaren hohlstabförmigen und rohrförmigen Teilen, welche in unterschiedlichen Einschubtiefen mittels eines durch die Kraft einer Druckfeder in Raststellung gehaltenen Rastelementes miteinander verrastbar sind und an ihren freien Enden jeweils eine Aufnahme für die Außenhülle des Betätigungszuges aufweisen, dessen Innenzug sich durch das hohlstab- und rohrförmige Teil erstreckt, wobei über das hohlstab- und das rohrförmige Teil ein hülsenförmiges Teil aufgeschoben und mit dem rohrförmigen Teil verbunden ist, und das hülsenförmige Teil im Bereich des hohlstabförmigen Teils eine konische Anlagefläche aufweist, an der das ringförmig ausgebildete und auf das hohlstabförmige Teil geschobene Rastelement mit einer radial äußeren Gleitfläche gleitet sowie mittels der Druckfeder in Raststellung an dem hohlstabförmigen Teil gehalten ist.

Eine solche Vorrichtung ist bereits aus der EP 0 638 733 A1 bekannt. Auf den Offenbarungsgehalt dieser ebenfalls auf die Anmelderin zurückgehenden Anmeldung wird ausdrücklich bezug genommen. Mit dieser bekannten Vorrichtung ist zwar eine Schnellverstellung des Betätigungszuges zur Längeneinstellung möglich, wobei auch die Gefahr einer Überlastung der Vorrichtung sicher vermieden ist. Allerdings ist die bekannte Vorrichtung nicht für einen selbsttätigen Längenausgleich bzw. eine selbsttätige Nachstellung des Betätigungszuges geeignet.

Aus der EP 0 342 994 A ist eine Vorrichtung zur selbsttätigen Längeneinstellung von mechanisch-flexiblen Fernbetätigungszügen für Kraftfahrzeuge bekannt, bei der Rastelemente mittels einer Rutsch- oder Reibungskupplung mit dem Außenschlauch des Fernbetätigungszuges in Verbindung stehen und von einer Raststellung in eine Verriegelungsstellung überführbar sind. Dabei wird mittels einer Feder, die zwischen einem Anschlag des Außenschlauches und der Vorrichtung eingespannt ist, eine Vorspannung auf das Innenseil des Betätigungszuges ausgeübt.

Schließlich ist aus der FR 2 607 202 A eine Vorrichtung zur Längeneinstellung bekannt, bei der zwei Federelemente vorgesehen sind, wobei ein Einstellorgan mittels einer Schaltvorrichtung in eine Blockierposition, eine Einstellposition und eine Zwischenposition überführt werden kann.

Demgegenüber liegt der Erfindung die Aufgabe zugrunde, die Vorrichtung mit den eingangs genannten Merkmalen dahingehend weiterzubilden, daß eine selbsttätige Längennachstellung des Betätigungszuges ermöglicht ist.

Diese Aufgabe wird bei der Vorrichtung mit den eingangs genannten Merkmalen dadurch gelöst, daß mit der, in der Aufnahme des hohlstabförmigen Teils aufgenommenen Außenhülle in Abstand zu der Aufnahme ein Anschlag fest verbunden ist und zwischen dem Anschlag und der Aufnahme ein Druckfederelement, insbesondere eine Schraubenfeder o. dgl., angeordnet ist, wobei die Federkonstante des Druckfederelements größer als die Federkonstante der Druckfeder ist, so daß zur Längennachstellung ein Herausfahren des hohlstabförmigen Teils aus dem rohrförmigen Teil erfolgt, wobei die Druckfeder auf Druck beansprucht wird und eine Rastverzahnung des Rastelements außer Eingriff mit Gegenrastmitteln des hohlstabförmigen Teils gelangt. Tritt aufgrund von Alterung, Verschleiß o. dgl. ein Spiel bzw. eine Lose in dem Betätigungszug bzw. Gesamtsystem auf, bewirkt das Druckfederelement bzw. die Schraubenfeder eine weitere Nachstellung der Vorrichtung im Sinne einer Verlängerung der Außenhülle des Betätigungszuges bzw. ein Herausfahren des hohlstabförmigen Teils aus dem rohrförmigen Teil, wobei die Feder auf Druck beansprucht wird und die Rastverzahnungen des Rastelements außer Eingriff mit der Radialverzahnung des hohlstabförmigen Teils gelangen. Somit wird durch das zwischen dem Anschlag und der Aufnahme vorgesehene Druckfederelement die selbsttätige Herausnahme der Lose auf dem Gesamtsystem gewährleistet. Eine mit der Ausübung einer Zugkraft auf den Innenzug einhergehende Druckbeanspruchung der Außenhülle bewirkt weiterhin, daß sich die Feder wieder entspannen kann und die Rastverzahnung des Rastsegments in Eingriff mit der Radialverzahnung des rohrstabförmigen Teils treten. Somit ist eine kraft- bzw. formschlüssige Verbindung zwischen dem hohlstabförmigen und dem rohrförmigen Teil erreicht, so daß eine Betätigung des Innenzugs spielfrei erfolgen kann. Unabhängig hiervon werden jedoch auch die weiteren Vorteile der Vorrichtung, insbesondere hinsichtlich einer Schnellverstellung und Feinverstellung, wie sie im einzelnen in der EP 0 638 733 A1 beschrieben sind, beibehalten.

Gemäß einer vorteilhaften Ausgestaltung der Erfindung wird die Schraubenfeder axial von dem Betätigungszug bzw. der Außenhülle durchsetzt. Somit sind weitere Maßnahmen zur Fixierung des Druckfederelements entbehrlich, wodurch sich ein äußerst einfacher konstruktiver Aufbau ergibt.

Von besonderem Vorteil ist nach einer weiteren, äußerst vorteilhaften Ausgestaltung der Erfindung vorgesehen, daß an der Aufnahme des hohlstabförmigen Teils ein entfernbares Sperrstück angebracht und das zusammengedrückte Druckfederelement in einem Vormontagezustand zwischen dem Anschlag und dem Sperrstück gehalten ist.

Gemäß einer konstruktiv besonders vorteilhaften Ausgestaltung ist an der Aufnahme eine umlaufende Nut o. dgl. vorgesehen, in die das als Bügel, Klammer, geschlitzte Platte o. dgl. ausgebildete Sperrteil klemmend, rastend o. dgl. lösbar einsetzbar ist.

Bei der Anlieferung der Vorrichtung ist das Sperrstück in die Nut eingesetzt, wobei die Schraubenfeder auf etwa ein Kleinstmaß zusammengedrückt ist, so daß eine Montage der Betätigungszüge vereinfacht wird. Am Band wird dann nach der Montage des Betätigungszuges das Sperrstück aus der Nut herausgezogen, wodurch die Schraubenfeder sich entspannt und an einer ringartigen Schulter des Randes des hülsenförmigen Teils abstützt. Aufgrund der dann zwischen dem Rand und dem Anschlag wirkenden Kräfte des Druckfederelements wird eine selbsttätige Verlängerung der Außenhülle des Betätigungszuges bewirkt, wie bereits weiter oben beschrieben.

Gemäß einer anderen vorteilhaften Weiterbildung der Erfindung weist das rohrförmige Teil einen Fortsatz oder ggf. ein Zwischenstück auf, mittels welchem das Rastelement bei einer entsprechenden Einschraubtiefe des rohrförmigen Teils in das hülsenförmige Teil außer Eingriff mit der Radialverzahnung des hohlstabförmigen Teils gelangt. Durch diese Maßnahme kann der Betätigungszug im Servicefall ohne weiteres ausgebaut werden. Dadurch, daß mittels des Fortsatzes des rohrförmigen Teils das Rastelement in Richtung der Schraubenfeder verschoben und somit die Rastverzahnung außer Eingriff mit der Radialverzahnung gebracht werden kann, läßt sich die Vorrichtung auf ein i. w. kleinstes Maß wieder zusammenschieben, um danach eine einfache Demontage bzw. Montage der Betätigungszüge an der Geber- bzw. Nehmerseite zu gewährleisten.

Dabei hat es sich als vorteilhaft erwiesen, daß ein die Einschraubtiefe des rohrförmigen Teils begrenzendes Sicherungselement vorgesehen ist, welches an dem hülsenförmigen Teil bzw. vorzugsweise an dem rohrförmigen Teil lösbar gehalten ist. Durch dieses Sicherungselement ist die Gefahr einer unbeabsichtigten Entriegelung des Rastelements durch ein Einschrauben des rohrförmigen Teils in das hülsenförmige Teil vermieden. Ist jedoch ein Lösen des Rastelements beabsichtigt, kann das Sicherungselement hierzu ohne weiteres entfernt und später, nach Beendigung der Servicearbeiten, wieder angebracht werden.

Desweiteren ist es äußerst vorteilhaft, daß das Rastelement aus mehreren, an der konischen Anlagefläche des hülsenförmigen Teils anliegenden Kreissegmenten gebildet ist, welche mittels der Druckfeder in Raststellung an dem hohlstabförmigen Teil gehalten sind. Durch diese Maßnahme ist ein sicheres Verriegeln bzw. Entriegeln der beiden ineinander bzw. auseinander schiebbaren hohlstabförmigen und rohrförmigen Teile gewährleistet.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Es zeigen:
- Figur 1: in einem Längsschnitt eine Ausführungsform einer erfindungsgemäßen Vorrichtung in einer Vormontagestellung,
- Figur 1a: eine vergrößerte Darstellung eines Sperrstücks,
- Figur 2: eine, an einem Betätigungszug montierte Vorrichtung mit noch befestigtem Sperrstück,
- Figur 3: die montierte Vorrichtung gemäß Figur 2, wobei das Sperrstück entfernt worden ist,
- Figur 4: die Vorrichtung gemäß Figur 3, wobei sich das Rastelement nun in der Verriegelungsstellung befindet und
- Figur 5: die montierte Vorrichtung mit durch Hineindrehen des rohrförmigen Teils wieder gelösten Rastelement.

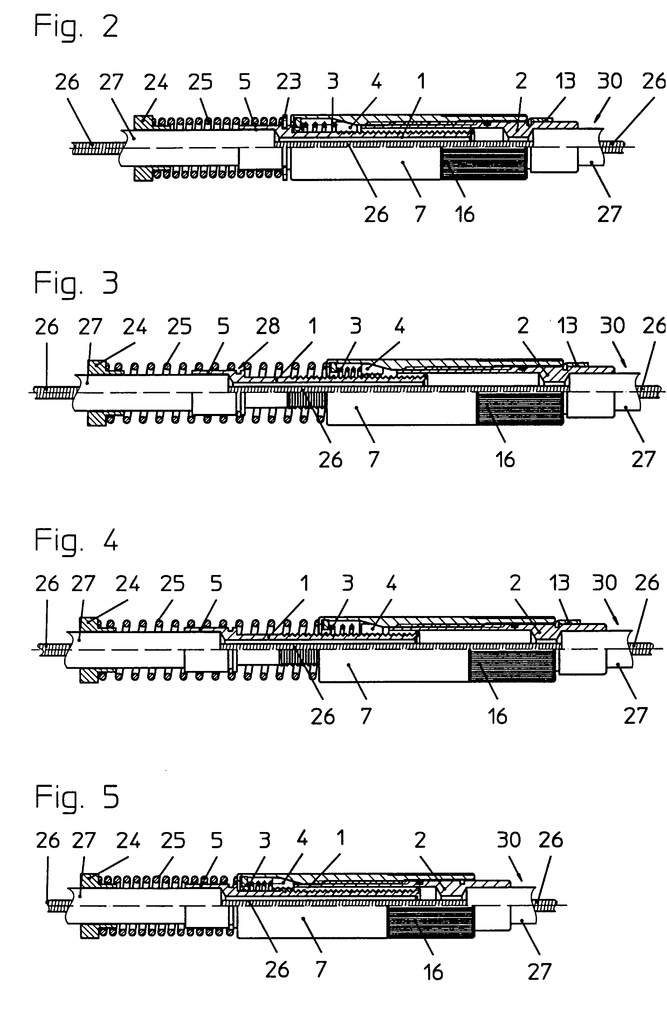

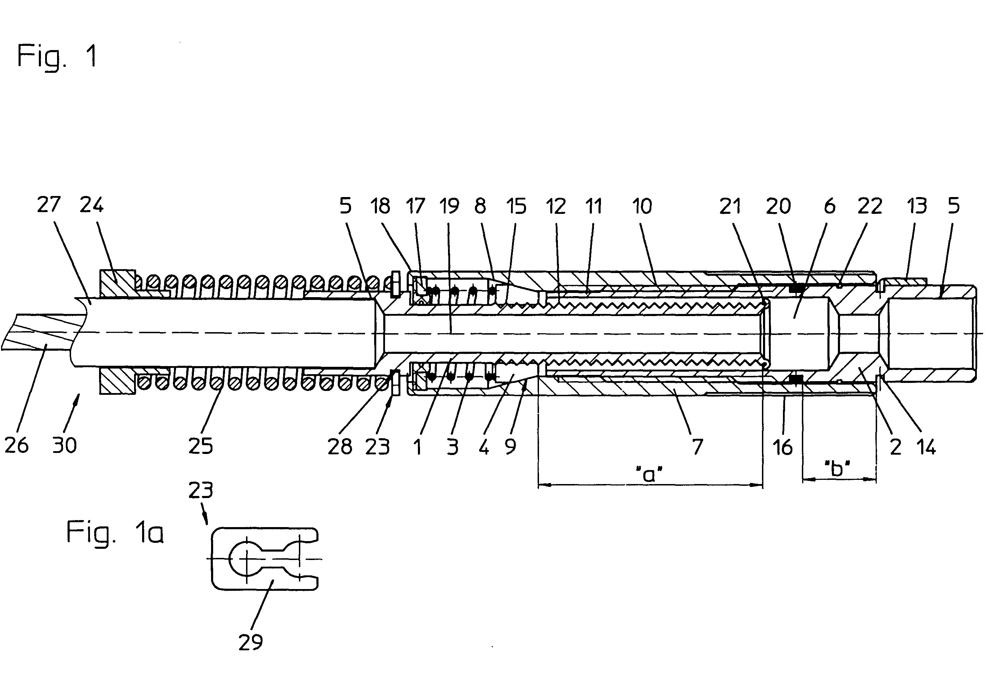

Die in Figur 1 detailliert dargestellte Vorrichtung dient zum Einstellen der Länge eines Betätigungszuges 30 bzw. eines Bremsseilzuges. Die Vorrichtung weist ein als Druckstange ausgebildetes hohlstabförmiges Teil 1 auf, welches mit seinem einen Ende in eine Ausnehmung 6 eines als Gewinderohr ausgebildeten rohrförmigen Teils 2 eingeschoben ist. Der Formschluß zwischen dem hohlstabförmigen und dem rohrförmigen Teil 1, 2 wird zum einen dadurch erreicht, daß bei der Montage über das hohlstabförmige Teil 1 ein als Verriegelungsrohr ausgebildetes hülsenförmiges Teil 7 geschoben ist. Bevorzugt ist dabei das rohrförmige Teil 2 mittels eines Schraubgewindes 10 in das hülsenförmige Teil 7 eingeschraubt. Zum anderen erfolgt die Verbindung zwischen dem hülsenförmigen Teil 7 und dem hohlstabförmigen Teil 1 mittels eines auf das hohlstabförmige Teil aufgeschobenen Rastelements 4, welches mittels einer sich an einem Dichtring 17 abstützenden Druckfeder 3 in einen konischen Sitz bzw. eine konische Anlagefläche 8 des hülsenförmigen Teils 7 gedrückt ist. Dabei kommt eine radial äußere Gleitfläche 9 des Rastelements 4 an der Anlagefläche 8 zur Anlage. Dabei greifen Rastzähne 15 des Rastelements 4 in die als Radialverzahnung 12 längs des hohlstabförmigen Teils 1 ausgebildeten Gegenrastmittel ein. Desweiteren hintergreift das hülsenförmige Teil 7 mit einem nach innen umgebördelten Rand 18 den Dichtring 17. Das hohlstabförmige Teil 1 weist an seinem im rohrförmigen Teil 2 liegenden Endabschnitt einen Anschlag 21 auf, welcher bei einem Auseinanderziehen der Teile 1, 2 in Wirkstellung mit den Rastverzahnungen des Rastelements 4 tritt und damit ein vollständiges Herausziehen verhindert. Weiterhin bildet dieser Anschlag 21 eine Führung beim Einschieben des hohlstabförmigen Teils 1 in die Ausnehmung 6 des rohrförmigen Teils 2.

Die nach außen gegenüber dem hülsenförmigen Teil 7 vorstehenden Enden des hohlstab- und rohrförmigen Teils 1, 2 besitzen jeweils eine als Schlauchfassung ausgebildete Aufnahme 5, in welche das entsprechende Ende der Außenhülle 27 des Betätigungszuges 30 verpreßt ist. Der Innenzug 26 bzw. das Bremsseil des Betätigungszuges 30 erstreckt sich durch eine zentrisch durchgehende Bohrung 19 in dem hohlstab- und rohrförmigen Teil 1, 2.

Um ein Eindringen von Feuchtigkeit und Staub in das Innere der Vorrichtung zu verhindern, ist das hülsenförmige Teil 7 gegen das rohrförmige Teil 2 mittels eines Dichtringes 20 abgedichtet. Die Abdichtung zwischen dem hohlstabförmigen Teil 1 und dem hülsenförmigen Teil 7 erfolgt mittels des Dichtringes 17, welcher bevorzugt in einem Gummi-Metall-Verbund hergestellt ist.

Das freie Ende des rohrförmigen Teils 2 ist mit einer Ringnut 14 versehen, in welche ein als Klammer o. dgl. ausgebildetes Sicherungselement 13 einklipsbar oder verrastbar ist. Beim Verdrehen des hülsenförmigen Teils 7 wird das rohrförmige Teil 2 in Richtung des hohlstabförmigen Teils 1 eingezogen, wobei das Sicherungselement 13 gegen die Stirnseite des hülsenförmigen Teils 7 gelangt und dadurch die Einschraubtiefe des rohrförmigen Teils 2 begrenzt. Nach einem Entfernen des Sicherungselements 13 kann durch ein Verdrehen des hülsenförmigen Teils 7 das rohrförmige Teil 2 in das hülsenförmige Teil 7 mittels des Schraubgewindes 10 eingezogen werden. Dabei gelangt ein axialer Fortsatz 11 des rohrförmigen Teils 2 an die Stirnseite des Rastelements 4 zur Anlage, so daß das Rastelement 4 bei einem weiteren Verdrehen des hülsenförmigen Teils 7 außer Eingriff mit dem hohlstabförmigen Teil 1 tritt. Um das Verdrehen des hülsenförmigen Teils 7 zu erleichtern, ist an seinem Außenmantel eine Riffelung 16 vorgesehen. Auf dem Außenmantel weist das rohrförmige Teil 2 eine, die Mittelstellung des Verdrehbereichs zwischen rohrförmigen Teil 2 und hülsenförmigen Teil 7 festlegende Markierung 22 auf.

Um eine selbsttätige Nachstellung der bereits eine Schnellverstellung sowie eine Feinverstellung aufweisenden Vorrichtung zu erreichen, enthält das rohrstabförmige Teil 1 eine zusätzliche Nut 28 zum Einsetzen eines herausnehmbaren Sperrstücks 23. Im Abstand dazu ist auf der Außenhülle 27 ein fest mit dieser Außenhülle 27 verbundener Anschlag 24 vorgesehen. Zwischen dem Anschlag 24 und dem Sperrstück 23 ist eine Schraubenfeder 25 o. dgl. Druckfederelement angeordnet, welche von dem Betätigungszug in axialer Richtung durchsetzt ist.

Bei der Anlieferung der Vorrichtung befindet sich das Sperrstück 23 entsprechend der Darstellung Figur 1 oder 2 in einer Nut 28 im äußeren Endbereich des hohlstabförmigen Teils 1. Dabei ist die Schraubenfeder 25 etwa auf das Kleinstmaß zusammengedrückt, um eine Montage des Betätigungszuges 30 zu vereinfachen. Am Band wird dann nach der Montage des Betätigungszuges 30 das Sperrstück 23 aus der Nut 28 herausgezogen, wodurch die Schraubenfeder 25 sich entspannt und an einer ringartigen Schulter des Randes 18 des hülsenförmigen Teils 7 abstützt. Aufgrund der zwischen dem Rand 18 und dem Anschlag 24 wirkenden Kräfte des Druckfederelements wird eine Verlängerung der Außenhülle des Betätigungszuges 30 aufgrund eines Herausfahrens des hohlstabförmigen Teils 1 aus dem rohrförmigen Teil 2 bewirkt und somit die vorhandene Lose aus dem Gesamtsystem herausgenommen. Dieser Zustand der Vorrichtung mit gelöstem Sperrstück 23 ist in Figur 3 als sogenannte typische Ersteinstellung dargestellt. Voraussetzung für diese selbsttätige Längeneinstellung der Vorrichtung bzw. Herausnahme der Lose ist jedoch, daß die Schraubenfeder 25 eine größere Federkraft bzw. Federkonstante als die Druckfeder 3 aufweist. Aufgrund dieser größeren Federkraft der Schraubenfeder 25 wird das Rastelement 4 sich unmittelbar nach dieser sogenannten typischen Ersteinstellung nicht immer sofort in der in Figur 4 dargestellten Verriegelungsstellung befinden, da die Federkraft der Druckfeder 3 geringer als die Federkraft der Schraubenfeder 25 ist. Bei Ausübung einer Zugkraft auf den Innenzug 26, bspw. bei einer ersten Betätigung des Bremspedals nach der sogenannten typischen Ersteinstellung, kommt es infolge der Abstützung der freien Schlauchenden der Außenhülle 27 des Betätigungszuges 30 an der Geber- bzw. Nehmerseite zur einer Druckbeanspruchung der Außenhülle 27 in entgegengesetzter Richtung zu der Zugbeanspruchung des Innenzuges 26. Dadurch, daß die Schraubenfeder 25 alle Lose aus dem Gesamtsystem herausgenommen hat, bewirkt diese Druckbeanspruchung auf die Außenhülle 27, daß die Druckfeder 3 sich nun entspannen kann und die Rastverzahnung 15 des Rastsegments 4 sicher in Eingriff mit der Radialverzahnung 12 des rohrstabförmigen Teils 1 tritt. Somit ist nach einer Betätigung des Gebers das Rastelement 4 selbsttätig in die Verriegelungsstellung überführt, wobei keinerlei Lose in dem Gesamtsystem vorhanden sind. Da somit eine kraft- bzw. formschlüssige Verbindung zwischen den Teilen 1, 2 der Vorrichtung und der Außenhülle 27 erreicht ist, kann die Betätigung des Innenzuges 26 spielfrei erfolgen. Dieser Zustand der Vorrichtung ist in Figur 4 dargestellt, wobei sich das Rastelement 4 in der Verriegelungsstellung befindet.

Wird nun die Kraft auf den Innenzug 26 aufgehoben und ist kein weiteres Spiel im Gesamtsystem erhalten, bleiben die Rastverzahnungen 15 des Rastelements 4 in der in Figur 4 dargestellten Position bezogen auf die Radialverzahnung 12 des hohlstabförmigen Teils 1.

Wenn zusätzliches Spiel, bspw. durch Alterung, Verschleiß o. dgl. auftritt, und dieses Spiel größer als eine Zahnbreite der Radial- bzw. Rastverzahnungen 12, 15 ist, bewirkt die Schraubenfeder 25 eine weitere Nachstellung im Sinne einer Verlängerung der Außenhülle 27 bzw. eines weiteren Herausführen des hohlstabförmigen Teils 1 aus dem rohrförmigen Teil 2, wobei die Feder 3 auf Druck beansprucht wird und die Rastverzahnung 15 außer Eingriff mit der Radialverzahnung 12 des hohlstabförmigen Teils 1 gelangt. Bei Betätigung des Gebers wiederholt sich dann der Ablauf der in den Figuren 3, 4 dargestellten Funktionen.

In Figur 5 ist die Situation für den Fall des Ausbaues des Betätigungszuges 30 im Servicefall dargestellt, wobei dann das Sicherungselement 13 entnommen wird und das rohrförmige Teil 2 in das hülsenförmige Teil 7 eingeschraubt wird. Hierdurch wird das Rastelement 4 in Richtung der Feder 25 verschoben, so daß die Rastverzahnungen 15 des Rastelements 4 außer Eingriff mit der Radialverzahnung 12 des hohlstabförmigen Teils 1 gelangt. Somit läßt sich die Vorrichtung dann mit dem in der Entriegelungsstellung befindlichen Rastelement 4 auf ein kleinstes Maß zusammenschieben, um eine einfache Demontage bzw. Montage des Betätigungszuges 30 an der Geber- und Nehmerseite zu gewährleisten.

### Bezugszeichenliste

- 1: - hohlstabförmiges Teil
- 2: - rohrförmiges Teil
- 3: - Druckfeder
- 4: - Rastelement
- 5: - Aufnahme
- 6: - Ausnehmung
- 7: - hülsenförmiges Teil
- 8: - Anlagefläche
- 9: - Gleitfläche
- 10: - Schraubgewinde
- 11: - Fortsatz
- 12: - Radialverzahnung
- 13: - Sicherungselement
- 14: - Ringnut
- 15: - Rastverzahnung
- 16: - Rändelung
- 17: - Dichtring
- 18: - Rand
- 19: - Bohrung
- 20: - Dichtring
- 21: - Anschlag
- 22: - Markierung
- 23: - Sperrstück
- 24: - Anschlag
- 25: - Schraubenfeder
- 26: - Innenzug
- 27: - Außenhülle
- 28: - Nut
- 29: - Bügel, Klammer
- 30: - Betätigungszug

## Patentansprüche

1. Vorrichtung zur Längeneinstellung von mechanisch-flexiblen Fernbetätigungszügen o. dgl., insbesondere für Bremsseilzüge von Kraftfahrzeugen, mit ineinanderschiebbaren hohlstabförmigen und rohrförmigen Teilen (1, 2), welche in unterschiedlichen Einschubtiefen mittels eines durch die Kraft einer Druckfeder (3)in Raststellung gehaltenen Rastelementes (4) miteinander verrastbar sind und an ihren freien Enden jeweils eine Aufnahme (5) für die Außenhülle (27) des Betätigungszuges (30) aufweisen, dessen Innenzug sich durch das hohlstabund rohrförmige Teil (1, 2) erstreckt, wobei über das hohlstab- und das rohrförmige Teil (1, 2) ein hülsenförmiges Teil (7) aufgeschoben und mit dem rohrförmigen Teil (2) verbunden ist, und das hülsenförmige Teil (7) im Bereich des hohlstabförmigen Teils (1) eine konische Anlagefläche (8) aufweist, an der das ringförmig ausgebildete und auf das hohlstabförmige Teil (1) geschobene Rastelement (4) mit einer radial äußeren Gleitfläche (9) gleitet sowie mittels der Druckfeder (3) in Raststellung an dem hohlstabförmigen Teil (1) gehalten ist, **dadurch gekennzeichnet, daß** mit der, in der Aufnahme (5) des hohlstabförmigen Teils (1) aufgenommenen Außenhülle (27) in Abstand zu der Aufnahme (5) ein Anschlag (24) fest verbunden ist und zwischen dem Anschlag (24) und der Aufnahme (5) ein Druckfederelement, insbesondere eine Schraubenfeder (25) o. dgl., angeordnet ist, wobei die Federkonstante des Druckfederelements größer als die Federkonstante der Druckfeder (3) ist, so daß zur Längennachstellung ein Herausfahren des hohlstabförmigen Teils (1) aus dem rohrförmigen Teil (2) erfolgt, wobei die Druckfeder (3) auf Druck beansprucht wird und eine Rastverzahnung (15) des Rastelements (4) außer Eingriff mit Gegenrastmitteln des hohlstabförmigen Teils (1) gelangt.

2. Vorrichtung nach Anspruch 1, **dadurch gekennzeichnet, daß** der Betätigungszug (30) bzw. die Außenhülle (27) die Schraubenfeder (25) axial durchsetzt.

3. Vorrichtung nach einem der vorhergehenden Ansprüche, **dadurch gekennzeichnet, daß** an der Aufnahme (5) des hohlstabförmigen Teils (1) ein entfernbares Sperrstück (30) angebracht und das zusammengedrückte Druckfederelement in einem Vormontagezustand zwischen dem Anschlag (24) und dem Sperrstück (23) gehalten ist.

4. Vorrichtung nach Anspruch 3, **dadurch gekennzeichnet, daß** an der Aufnahme (5) eine Nut (28) o. dgl. vorgesehen ist, in die das als Bügel (29), Klammer, geschlitzte Platte o. dgl. ausgebildete Sperrteil (23) klemmend, rastend o. dgl., lösbar einsetzbar ist.

5. Vorrichtung nach einem der vorhergehenden Ansprüche, **dadurch gekennzeichnet, daß** das rohrförmige Teil (2) einen Fortsatz (11) oder ggf. ein Zwischenstück aufweist, mittels welchem das Rastelement (4) bei einer entsprechenden Einschraubtiefe des rohrförmigen Teils (2) in das hülsenförmige Teil (7) außer Eingriff mit der Radialverzahnung (12) des hohlstabförmigen Teils (1) gelangt.

6. Vorrichtung nach einem der vorhergehenden Ansprüche, **dadurch gekennzeichnet, daß** ein die Einschraubtiefe des rohrförmigen Teils (2) begrenzendes Sicherungselement (13) vorgesehen ist, welches an dem hülsenförmigen Teil (7) bzw. an dem rohrförmigen Teil (2) lösbar gehalten ist.

7. Vorrichtung nach einem der vorhergehenden Ansprüche, **dadurch gekennzeichnet, daß** das Rastelement (4) aus mehreren, an der konischen Anlagefläche (8) des hülsenförmigen Teils (7) anliegenden Kreissegmenten gebildet ist, welche mittels der Druckfeder (3) in Raststellung an dem hohlstabförmigen Teil (1) gehalten sind.

## Claims

1. Device for length adjustment of flexible mechanical remote actuating pulls or the like, particularly for brake cable pulls of motor vehicles, with hollow-rod-shaped and tubular parts (1, 2) which are pushable into one another and can be detented together at different depths of insertion by means of a detent element (4) held in detent setting by the force of a compression spring (3) and which have at each of the free ends thereof a respective receptacle (5) for the outer casing (27) of the actuating pull (30), the inner pull of which extends through the hollow-rod-shaped and the tubular part (1, 2), wherein a sleeve-shaped part (7) is pushed on over the hollow-rod-shaped and the tubular part (1, 2) and is connected with the tubular part (2), and the sleeve-shaped part (7) has in the region of the hollow-rod-shaped part (1) a conical contact surface (8) at which the detent element (4), which is of annular construction and is pushed onto the hollow-rod-shaped part (1), slides by a radial outer slide surface (9) and is held in detent setting at the hollow-rod-shaped part (1) by means of the compression spring (3), **characterised in that** an abutment (24) is fixedly connected with the outer casing (27), which is received in the receptacle (5) of the hollow-rod-shaped part (1), at a spacing from the receptacle (5), and a compression spring element, particularly a helical spring (25) or the like, is arranged between the abutment (24) and the receptacle (5), wherein the spring constant of the compression spring element is greater than the spring constant of the compression spring (3) so that a movement of the hollow-rod-shaped part (1) out of the tubular part (2) takes place for the length adjustment, wherein the compression spring (3) is loaded in compression and a detent toothing (15) of the detent element (4) comes out of engagement with counter detent means of the hollow-rod-shaped part (1).

2. Device according to claim 1, **characterised in that** the actuating pull (30) or the outer casing (27) extends axially through the helical spring (25).

3. Device according to one of the preceding claims, **characterised in that** a removable blocking member (30) is mounted at the receptacle (5) of the hollow-rod-shaped part (1) and the compressed compression spring element in a premounted state is retained between the abutment (24) and the blocking member (23).

4. Device according to claim 3, **characterised in that** a groove (28) or the like, in which the blocking part (23), which is constructed as a yoke (29), clip, slotted plate or the like, is detachably insertable in clamping, detenting or like manner, is provided at the receptacle (5).

5. Device according to one of the preceding claims, **characterised in that** the tubular part (2) has a projection (11) or optionally an intermediate member, by means of which the detent element (4) comes out of engagement with the radial toothing (12) of the hollow-rod-shaped part (1) in the case of a corresponding screw-in depth of the tubular part (2) into the sleeve-shaped part (7).

6. Device according to one of the preceding claims, **characterised in that** a securing element (13), which limits the screw-in depth of the tubular part (2) and is detachably retained at the sleeve-shaped part (7) or at the tubular part (2), is provided.

7. Device according to one of the preceding claims, **characterised in that** the detent element (4) is formed from several circular segments which bear against the conical contact surface (8) of the sleeve-shaped part (7) and which are retained at the hollow-rod-shaped part (1) in detent setting by means of the compression spring (3).

## Revendications

1. Dispositif de réglage de longueur de câbles d'actionnement à distance mécaniquement flexibles ou analogue, notamment pour câbles de frein de véhicules automobiles, comprenant des pièces en forme de tige creuse et en forme de tube (1, 2) pouvant être montées d'une manière télescopique qui peuvent être arrêtées l'une vis-à-vis de l'autre à des profondeurs d'enfoncement différentes au moyen d'un élément d'arrêt (4) maintenu en position d'arrêt par la force d'un ressort de compression (3) et qui comprennent chacune, à leur extrémité libre, une partie réceptrice (5) pour la gaine extérieure (27) du câble d'actionnement (30) dont le câble intérieur s'étend en traversant la pièce en forme de tige creuse et la pièce en forme de tube (1, 2), tandis qu'une pièce en forme de manchon (7) est enfilée pardessus la pièce en forme de tige creuse et la pièce en forme de tube (1, 2) et est reliée à la pièce en forme de tube (2) et que la pièce en forme de manchon (7) comporte, dans la zone de la pièce en forme de tige creuse (1), une surface d'appui (8) conique sur laquelle l'élément d'arrêt (4) réalisé en forme d'anneau et enfilé sur la pièce en forme de tige creuse (1), glisse par une surface de glissement (9) radialement extérieure et est maintenu en position d'arrêt sur la pièce en forme de tige creuse (1) au moyen du ressort de compression (3), **caractérisé en ce qu'**une butée (24) est reliée d'une manière fixe, à distance de la partie réceptrice (5), à la gaine extérieure (27) reçue dans la partie réceptrice (5) de la pièce en forme de tige creuse (1) et un élément de ressort de compression, notamment un ressort hélicoïdal (25) ou analogue, est disposé entre la butée (24) et la partie réceptrice (5), la constante de raideur de l'élément de ressort de compression étant supérieure à la constante de raideur du ressort de compression (3), de sorte que, pour le rattrapage de jeu en longueur, il se produit une sortie de la pièce en forme de tige creuse (1) hors de la pièce en forme de tube (2), le ressort de compression (3) étant sollicité à la compression et une denture d'arrêt (15) de l'élément d'arrêt (4) venant hors de prise vis-à-vis de moyens d'arrêt complémentaires de la pièce en forme de tige creuse (1).

2. Dispositif suivant la revendication 1, **caractérisé en ce que** le câble d'actionnement (30), plus précisément la gaine extérieure (27), traverse axialement le ressort hélicoïdal (25).

3. Dispositif suivant l'une des revendications précédentes, **caractérisé en ce qu'**un élément de blocage (30) amovible est monté sur la partie réceptrice (5) de la pièce en forme de tige creuse (1) et l'élément de ressort de compression, comprimé, est maintenu, dans un état de montage préalable, entre la butée (24) et l'élément de blocage (23).

4. Dispositif suivant la revendication 3, **caractérisé en ce que**, sur la partie réceptrice (5), il est prévu une gorge (28) ou analogue dans laquelle l'élément de blocage (23), réalisé sous forme d'étrier (29), pince, plaquette fendue ou analogue, peut être placé d'une manière amovible en étant serré, arrêté ou analogue.

5. Dispositif suivant l'une des revendications précédentes, **caractérisé en ce que** la pièce en forme de tube (2) comporte un prolongement (11), ou éventuellement un élément intermédiaire, au moyen duquel, pour une profondeur de vissage appropriée de la pièce en forme de tube (2) dans la pièce en forme de manchon (7), l'élément d'arrêt (4) vient hors de prise vis-à-vis de la denture radiale (12) de la pièce en forme de tige creuse (1).

6. Dispositif suivant l'une des revendications précédentes, **caractérisé en ce qu'**il est prévu un élément de sécurité (13), limitant la profondeur de vissage de la pièce en forme de tube (2), qui est maintenu d'une manière séparable sur la pièce en forme de manchon (7) ou sur la pièce en forme de tube (2).

7. Dispositif suivant l'une des revendications précédentes, **caractérisé en ce que** l'élément d'arrêt (4) est formé de plusieurs segments de cercle, appliqués sur la surface d'appui (8) conique de la pièce en forme de manchon (7), qui sont maintenus en position d'arrêt sur la pièce en forme de tige creuse (1) au moyen du ressort de compression (3).
